# EUROPÄISCHE PATENTSCHRIFT

(11) **EP 3 598 903 B1**
(45) Veröffentlichungstag und Bekanntmachung des Hinweises auf die Patenterteilung: **09.12.2020**
(21) Anmeldenummer: 18185683.2
(22) Anmeldetag: 26.07.2018
(51) Int. Cl.: A23N 12/08, A23F 5/04, A23N 12/12

(54) **RÖSTANLAGE ZUM RÖSTEN VON LEBENSMITTELPRODUKTEN UND VERFAHREN ZUM BETREIBEN EINER RÖSTANLAGE ZUM RÖSTEN VON LEBENSMITTELPRODUKTEN**
ROASTING UNIT FOR ROASTING OF FOOD PRODUCTS AND A METHOD FOR OPERATING A ROASTING UNIT FOR ROASTING FOOD PRODUCTS
INSTALLATION DE TORRÉFACTION PERMETTANT DE TORRÉFIER DES PRODUITS ALIMENTAIRES ET PROCÉDÉ DE FONCTIONNEMENT D'UNE INSTALLATION DE TORRÉFACTION PERMETTANT DE TORRÉFIER DES PRODUITS ALIMENTAIRES

(43) Veröffentlichungstag der Anmeldung: 29.01.2020
(73) Patentinhaber: ReiCat GmbH, 63571 Gelnhausen (DE)
(72) Erfinder: Nickel, Patrick, 63505 Langenselbold (DE)
(74) Vertreter: Franke, Markus

(56) Entgegenhaltungen:
- EP-A1- 0 745 334
- WO-A1-84/01271
- DE-A1- 3 711 098
- DE-A1- 4 028 112
- DE-B3-102004 038 730
- DE-T2- 69 819 251
- DE-U1- 20 008 189
- JP-A- S 536 268

## Beschreibung

Die Erfindung betrifft eine Röstanlage zum Rösten von Lebensmittelprodukten, insbesondere zum Rösten von Kaffeebohnen, sowie ein Verfahren zum Betreiben einer Röstanlage zum Rösten von Lebensmittelprodukten. Die Erfindung betrifft insbesondere eine Röstanlage zum Rösten von Kaffeebohnen sowie ein Verfahren zum Betreiben einer Röstanlage zum Rösten von Kaffeebohnen.

Viele Lebensmittelprodukte werden geröstet um diese haltbarer zu machen, geschmacklich zu verändern oder deren Konsistenz zu verändern. Typische Lebensmittelprodukte, welche geröstet werden, sind beispielsweise Kakaobohnen und Kaffeebohnen. Aber auch Ölsamen, wie beispielsweise Mandeln oder Haselnüsse, Kleien und Erbsen werden häufig geröstet.

Beim Röstvorgang der Lebensmittelprodukte bilden sich aus den Röstverlusten Geruchsstoffe und Schadstoffe. Die mit diesen Stoffen belasteten Abgase müssen durch geeignete Reinigungsverfahren gereinigt werden, bevor sie in die Umgebung abgegeben werden dürfen. Beispielsweise entstehen beim Rösten von Kaffeebohnen Kohlenwasserstoffe, die einen schädlichen Einfluss auf Menschen und Umwelt haben und/oder Gerüche verursachen, die benachbarte Anwohner als störend empfinden können. Zu diesem Zweck weisen Röstanlagen in der Regel eine Abluftreinigungseinrichtung zum Reinigen der Abluft auf.

Die erfindungsgemäße Röstanlage sowie das erfindungsgemäße Verfahren zum Betreiben einer Röstanlage betrifft eine Röstanlage zum Rösten von Lebensmittelprodukten, insbesondere zum Rösten von Kaffeebohnen, wobei die Röstanlage eine Rösteinrichtung zum Rösten der Lebensmittelprodukte und eine Kühleinrichtung zum Kühlen der in der Rösteinrichtung gerösteten Lebensmittelprodukte aufweist. Sowohl beim eigentlichen Röstvorgang, welcher in der Rösteinrichtung stattfindet, als auch beim Abkühlvorgang, welcher in der Kühlvorrichtung stattfindet, entstehen und/oder entweichen Schadstoffe aus dem Lebensmittelprodukt bzw. dem abkühlenden gerösteten Lebensmittelprodukt (Röstgut). Dementsprechend sind sowohl die Röstabluft der Rösteinrichtung als auch die Kühlabluft der Kühleinrichtung schadstoffbelastet und müssen vor der Abgabe an die Umgebung gereinigt werden.

Aus dem Stand der Technik sind Röstanlagen bekannt, welche eine Rösteinrichtung zum Rösten der Lebensmittelprodukte und eine Kühleinrichtung zum Kühlen der in der Rösteinrichtung gerösteten Lebensmittelprodukte aufweisen. Derartige Röstanlagen weisen eine gemeinsame Abluftreinigungseinrichtung zum Reinigen von schadstoffbelasteter Röstabluft der Rösteinrichtung sowie zum Reinigen von schadstoffbelasteter Kühlabluft der Kühleinrichtung auf. Es sind auch Röstanlagen bekannt, welche voneinander getrennte Abluftreinigungseinrichtungen aufweisen, wobei eine der Abluftreinigungseinrichtungen der Reinigung der Röstabluft und eine andere der Abluftreinigungseinrichtungen der Reinigung der Kühlabluft dient. Zwecks Reinigung wird während des Röstvorgangs die beim Rösten der Lebensmittelprodukte entstehende schadstoffbelastete Röstabluft der gemeinsamen Abluftreinigungseinrichtung und zumindest zu Beginn des Kühlvorgangs die beim Abkühlen der gerösteten Lebensmittelprodukte in der Kühleinrichtung entstehende schadstoffbelastete Kühlabluft ebenfalls der gemeinsamen Abluftreinigungseinrichtung zugeführt wird.

Eine Röstanlage zum Rösten von Kaffeebohnen, welche eine gemeinsame Abluftreinigungseinrichtung zum Reinigen von schadstoffbelasteter Röstabluft der Rösteinrichtung sowie zum Reinigen von schadstoffbelasteter Kühlabluft der Kühleinrichtung aufweist, ist aus der DE 200 08 189 U1 bekannt.

Weitere Röstanlagen sind aus der DE 10 2004 038 730 B3 sowie der WO 84/01271 bekannt.

Nachteilig bei derartigen Röstanlagen ist, dass, aufgrund der gegenüber der Röstabluft geringeren Temperatur der Kühlabluft, die Abluft, welche der Abluftreinigungseinrichtung zugeführt wird und welche sowohl Röstabluft als auch Kühlabluft aufweist, eine gegenüber der Röstabluft reduzierte Temperatur aufweist. Da zur Reinigung der Abluft in der Abluftreinigungseinrichtung eine gewisse Energiemenge in Form von thermischer Energie benötigt wird, muss daher bei derartigen Röstanlagen der Abluft und/oder der gemeinsamen Abluftreinigungseinrichtung zusätzliche Wärmeenergie zugeführt werden. Dies erfolgt beispielsweise mittels Heizelementen oder eines Brenners.

Aufgabe der vorliegenden Erfindung ist es, eine Röstanlage derart weiterzubilden, dass der zum Betrieb der Röstanlage erforderliche Energiebedarf reduziert ist. Ferner ist es Aufgabe der Erfindung, ein Verfahren zum Betrieb einer derartigen Röstanlage anzugeben.

Diese Aufgabe wird durch eine Röstanlage, die die Merkmale des Patentanspruchs 1 aufweist, sowie ein Verfahren zum Betrieb einer Röstanlage, das die Merkmale des Patentanspruchs 8 aufweist, gelöst.

Die erfindungsgemäße Röstanlage dient dem Rösten von Lebensmittelprodukten, insbesondere dem Rösten von Kaffeebohnen. Die Röstanlage weist eine Rösteinrichtung zum Rösten der Lebensmittelprodukte und eine Kühleinrichtung zum Kühlen der in der Rösteinrichtung gerösteten Lebensmittelprodukte auf. Die Röstanlage weist eine erste Abluftreinigungseinrichtung zum Reinigen von schadstoffbelasteter Röstabluft der Rösteinrichtung auf, wobei während des Röstvorgangs die beim Rösten der Lebensmittelprodukte entstehende schadstoffbelastete Röstabluft der ersten Abluftreinigungseinrichtung zugeführt wird. Des Weiteren weist die Röstanlage eine zweite Abluftreinigungseinrichtung zum Reinigen von schadstoffbelasteter Kühlabluft der Kühleinrichtung auf, wobei während des Kühlvorgangs die beim Abkühlen der gerösteten Lebensmittelprodukte in der Kühleinrichtung entstehende schadstoffbelastete Kühlabluft der zweiten Abluftreinigungseinrichtung zuführbar ist. Ferner ist die aus der ersten Abluftreinigungseinrichtung austretende, gereinigte Röstabluft zumindest teilweise der zweiten Abluftreinigungseinrichtung zuführbar.

Typischerweise weist die gereinigte Röstabluft eine gegenüber der Kühlabluft höhere Temperatur auf. Die Gestaltung der erfindungsgemäßen Röstanlage ermöglicht es, durch Zuführen der gereinigten Röstabluft in die zweite Abluftreinigungseinrichtung die zweite Abluftreinigungseinrichtung zu erwärmen bzw. vorzuwärmen, insbesondere einen Katalysator der zweiten Ablufteinrichtung zu erwärmen bzw. vorzuwärmen. Dadurch muss keine oder nur eine geringere Menge von thermischer Energie der zweiten Abluftreinigungseinrichtung zusätzlich zugeführt werden, um die der zweiten Abluftreinigungseirichtung zugeführte schadstoffbelastete Kühlabluft zu reinigen.

Weiterhin wird ein Abkühlen der der ersten Abluftreinigungseinrichtung zugeführten Abluft durch das Zuführen von relativ kalter Kühlabluft zu der ersten Abluftreinigungseinrichtung vermieden. Dadurch reduziert sich die Menge der thermischen Energie, welche der ersten Abluftreinigungseinrichtung zusätzlich zugeführt werden muss.

Ein weiterer Vorteil der separaten Abluftreinigungseinrichtungen ist, dass die Eigenschaften der jeweiligen Abluftreinigungseinrichtung auf die jeweils zu reinigende Abluft abgestimmt werden kann. So unterscheiden sich die in der Röstabluft vorliegenden Schadstoffe in Art und/oder Konzentration typischerweise von denjenigen in der Kühlabluft. Auch die Volumenströme der jeweiligen Abluft sind in der Regel unterschiedlich. Die erfindungsgemäße Röstanlage ermöglicht es, die jeweilige Abluftreinigungseinrichtung unabhängig von der anderen Abluftreinigungseinrichtung, beispielsweise durch Wahl der Betriebstemperatur, der verwendeten Katalysatormedien und/oder der Behandlungszeit in der Abluftreinigungseinrichtung, optimal an die Eigenschaften der jeweils zu reinigende Abluft anzupassen.

Bei der Verwendung einer gemeinsamen Abluftreinigungseinrichtung ist ebenfalls von Nachteil, dass eine hohe Konzentration von Schadstoffen in der Röstabluft regelmäßig zu Beginn des Röstvorgangs, insbesondere beim Befüllen der Rösteinrichtung mit dem ungerösteten Lebensmittelprodukt, und die höchste Konzentration von Schadstoffen in der Kühlabluft regelmäßig ebenfalls zu Beginn des Kühlvorgangs auftreten. Bei diskontinuierlichen arbeitenden Röstanlagen werden nach Abschluss des Röstvorgangs die gerösteten Lebensmittelprodukte der Kühlvorrichtung zugeführt und die Röstvorrichtung wiederum mit dem ungerösteten Lebensmittelprodukt befüllt. Dementsprechend beginnen der Röstvorgang und der Abkühlvorgang gleichzeitig oder annähernd gleichzeitig, sodass der Zeitraum, bei dem eine hohe Konzentration von Schadstoffen in der Röstabluft vorliegt, mit dem Zeitraum zusammenfällt oder zumindest überlappt, bei dem ebenfalls eine hohe Konzentration von Schadstoffen in der Kühlabluft vorliegt. Diese zeitliche Überlagerung hat zur Folge, dass bei Verwendung einer gemeinsamen Abluftreinigungseinrichtung diese entweder eine verhältnismäßig große Reinigungskapazität aufweisen muss, um während der Überlagerung der vorgenannten Zeiträume mit hoher Schadstoffkonzentration eine ausreichende Reinigung zu gewährleisten, oder zu Beginn des Kühlvorgangs die Kühleinrichtung mit einer geringeren Fördermenge von Kühlluft betrieben werden muss, um den der gemeinsamen Abluftreinigungseinrichtung zugeführten Abluftvolumenstrom zu reduzieren. Allerdings kann sich eine Reduzierung des Abluftvolumenstroms negativ auf die Eigenschaften des Röstguts auswirken, beispielsweise das Aroma negativ beeinflussen. Auch wird dadurch der Kühlvorgang zeitlich verlängert. Diese vorgenannten Nachteile werden durch die Verwendung von zwei separaten Abluftreinigungseinrichtungen vermieden.

Vorzugsweise handelt es sich bei der Röstanlage um eine diskontinuierlich arbeitende Röstanlage. Bei diskontinuierlichen arbeitenden Röstanlagen werden nach Abschluss des Röstvorgangs die gerösteten Lebensmittelprodukte der Kühlvorrichtung zugeführt und die Röstvorrichtung wiederum mit dem ungerösteten Lebensmittelprodukt befüllt. Dementsprechend erfolgt das Rösten und Abkühlen der Lebensmittelprodukte batchweise.

Als besonders vorteilhaft wird es angesehen, wenn die Zuführung der gereinigten Röstabluft und/oder die Zuführung der schadstoffbelasteten Kühlabluft zu der zweiten Abluftreinigungseinrichtung regelbar ist. Die jeweilige Regelung kann beispielsweise mittels einer Armatur oder mehreren Armaturen erfolgen. Es ist aber auch durchaus denkbar, dass die Regelung mittels drehzahlgeregelter Gebläse erfolgt.

Insbesondere ist vorgesehen, dass die Röstanlage derart ausgebildet ist, dass die schadstoffbelastete Kühlabluft auch derart geführt werden kann, dass diese nicht oder nur teilweise der zweiten Abluftreinigungseinrichtung zugeführt wird. Dies hat den Vorteil, dass zu Beginn des Kühlvorgangs, bei der eine hohe Konzentration von Schadstoffen vorliegt, die Kühlabluft zwecks Reinigung der zweiten Abluftreinigungseinrichtung zugeführt werden kann und in einer Phase des Abkühlvorgangs, bei der die Schadstoffbelastung der Kühlabluft unbedenklich ist, die Kühlabluft unmittelbar in die Umgebung abgegeben werden kann.

Vorzugsweise ist die Rösteinrichtung als Trommelröster ausgebildet.

In einer vorteilhaften Weiterbildung ist vorgesehen, dass die Röstanlage eine erste Fördereinrichtung zum Fördern von Röstluft zu der Rösteinrichtung und/oder eine zweite Fördereinrichtung zum Fördern von Kühlluft zu der Kühleinrichtung aufweist. Vorzugsweise ist die Fördereinrichtung als Ventilator oder Gebläse ausgebildet oder weist einen Ventilator und/oder ein Gebläse auf.

Vorzugsweise wird die zum Rösten verwendete Röstluft in einem Kreislauf gefahren und erwärmt, wobei während des Röstvorgangs ein Teilstrom der Röstluft aus dem Kreislauf entfernt und durch Frischluft ersetzt wird. Der aus dem Kreislauf entfernte Teil bildet die schadstoffbelastete Röstabluft.

Als besonders vorteilhaft wird es angesehen, wenn die erste Abluftreinigungseinrichtung einen Katalysator aufweist und/oder die zweite Abluftreinigungseinrichtung einen Katalysator aufweist. Insbesondere handelt es sich bei dem jeweiligen Katalysator um einen Katalysator zur katalytischen Oxidation oder zur thermischen Nachverbrennung.

Um eine besonders große Wärmemenge in der zweiten Abluftreinigungseinrichtung zu speichern, ist es durchaus denkbar, dass die zweite Abluftreinigungseinrichtung ein oder mehrere Wärmespeicherelemente aufweist. Bei den Wärmespeicherelementen handelt es sich vorzugsweise um sensible Wärmespeicher. Die Wärmespeicherelemente können durchaus ein integraler Bestandteil eines Katalysators der zweiten Abluftreinigungseinrichtung sein.

Bei dem erfindungsgemäße Verfahren zum Betreiben einer Röstanlage zum Rösten von Lebensmittelprodukten, beispielsweise zum Rösten von Kaffeebohnen, weist die Röstanlage eine Rösteinrichtung zum Rösten der Lebensmittelprodukte und eine Kühleinrichtung zum Kühlen der in der Rösteinrichtung gerösteten Lebensmittelprodukte auf. Die Röstanlage weist eine erste Abluftreinigungseinrichtung zum Reinigen von schadstoffbelasteter Röstabluft der Rösteinrichtung auf. Dabei wird während des Röstvorgangs die beim Rösten der Lebensmittelprodukte entstehende schadstoffbelastete Röstabluft der ersten Abluftreinigungseinrichtung zugeführt. Die Röstanlage weist eine zweite Abluftreinigungseinrichtung zum Reinigen von schadstoffbelasteter Kühlabluft der Kühleinrichtung auf. Dabei wird während des Kühlvorgangs die beim Abkühlen der gerösteten Lebensmittelprodukte in der Kühleinrichtung entstehende schadstoffbelastete Kühlabluft der zweiten Abluftreinigungseinrichtung zugeführt. Die aus der ersten Abluftreinigungseinrichtung austretende, gereinigte Röstabluft wird zumindest teilweise der zweiten Abluftreinigungseinrichtung zugeführt. Die aus der ersten Abluftreinigungseinrichtung austretende, gereinigte Röstabluft wird vorzugsweise außerhalb des Kühlvorgangs zumindest teilweise der zweiten Abluftreinigungseinrichtung zugeführt.

Durch das Zuführen der gereinigten Röstabluft in die zweite Abluftreinigungseinrichtung wird die zweite Abluftreinigungseinrichtung erwärmt, insbesondere ein Katalysator der zweiten Ablufteinrichtung erwärmt, wodurch keine oder nur eine geringere Menge von thermischer Energie der zweiten Abluftreinigungseinrichtung und/oder der Kühlabluft zwecks Reinigung der zugeführten Kühlabluft zusätzlich zugeführt werden muss. Die zweite Abluftreinigungseinrichtung, insbesondere ein Katalysator der zweiten Abluftreinigungseinrichtung dient somit als Wärmespeicher.

Vorzugsweise weist das Verfahren die folgenden Verfahrensschritte auf:
a) Einbringen der zu röstenden Lebensmittelprodukte in die Rösteinrichtung,
b) Rösten der Lebensmittelprodukte in der Rösteinrichtung, wobei während des Röstvorgangs die beim Rösten der Lebensmittelprodukte entstehende schadstoffbelastete Röstabluft der ersten Abluftreinigungseinrichtung zugeführt wird, wobei die aus der ersten Abluftreinigungseinrichtung austretende, gereinigte Röstabluft zumindest teilweise der zweiten Abluftreinigungseinrichtung zugeführt wird,
c) Überführen der gerösteten Lebensmittelprodukte aus der Rösteinrichtung in die Kühleinrichtung nach Abschluss des Röstvorgangs,
d) Abkühlen der gerösteten Lebensmittelprodukte in der Kühleinrichtung, wobei während des Kühlvorgangs die beim Abkühlen der gerösteten Lebensmittelprodukte in der Kühleinrichtung entstehende Kühlabluft der zweiten Abluftreinigungseinrichtung zugeführt wird,
e) Entnehmen der gerösteten Lebensmittelprodukte aus der Kühleinrichtung nach Abschluss des Kühlvorgangs,
f) Wiederholen der Verfahrensschritte a) bis e)

Es ist durchaus denkbar und bevorzugt, dass der Röstvorgang und der Kühlvorgang zumindest teilweise zeitgleich ablaufen.

In einer bevorzugten Ausführungsform des Verfahrens erfolgt die Zuführung der gereinigten Röstabluft und/oder die Zuführung der schadstoffbelasteten Kühlabluft zu der zweiten Abluftreinigungseinrichtung diskontinuierlich.

Vorzugsweise wird zu Beginn des Kühlvorgangs die Kühlabluft der zweiten Reinigungseinrichtung zugeführt und die Zuführung der gereinigten Röstabluft zu der zweiten Abluftreinigungseinrichtung unterbrochen und zum Ende des Kühlvorgangs wird die gereinigte Röstabluft der zweiten Abluftreinigungseinrichtung zugeführt und die Zuführung der Kühlabluft zu der zweiten Abluftreinigungseinrichtung unterbrochen. Somit wird die schadstoffbelastete Kühlabluft zu Beginn des Kühlvorgangs, bei dem die Kühlabluft typischerweise eine besonders hohe Schadstoffkonzentration aufweist, der mittels der Röstabluft vorgewärmten zweiten Abluftreinigungseinrichtung zugeführt. Die in der zweiten Abluftreinigungseinrichtung aufgrund der zugeführten gereinigten Röstabluft enthaltene Wärmemenge wird dann zur Reinigung der schadstoffbelasteten Kühlabluft verwendet. Dabei kühlt sich die zweite Abluftreinigungseinrichtung ab. Zum Ende des Kühlvorgangs, bei dem die Kühlabluft typischerweise eine besonders niedrige Schadstoffkonzentration aufweist, wird die nun abgekühlte zweite Abluftreinigungseinrichtung mittels der nun zugeführten, gereinigten, heißen Röstabluft wieder aufgewärmt. In der Regel ist die Schadstoffbelastung der Kühlabluft zum Ende des Kühlvorgangs derart gering, dass eine Reinigung dieser Kühlabluft in der zweiten Abluftreinigungseinrichtung nicht notwendig ist. Dabei ist es durchaus denkbar, dass die zum Ende des Kühlvorgangs entstehende Kühlabluft eine derart geringe Schadstoffkonzentration aufweist, dass diese Kühlabluft ohne Reinigung in die Umgebung abgegeben werden kann.

Als besonders vorteilhaft wird es angesehen, wenn die Zuführung der schadstoffbelasteten Kühlabluft zu der zweiten Abluftreinigungseinrichtung abhängig von einer Temperatur der in der Kühleinrichtung befindlichen gerösteten Lebensmittelprodukte und/oder abhängig von einer Temperatur der zweiten Abluftreinigungseinrichtung, insbesondere eines Katalysators der zweiten Abluftreinigungseinrichtung, und/oder abhängig von einer in der schadstoffbelasteten Kühlabluft vorliegenden Schadstoffkonzentration geregelt, insbesondere unterbrochen wird. Vorzugsweise wird bei Unterschreitung eines Schwellwerts der Temperatur der Lebensmittelprodukte und/oder der Temperatur der zweiten Abluftreinigungseinrichtung und/oder der Schadstoffkonzentration die Zuführung der Kühlabluft zu der zweiten Abluftreinigungseinrichtung unterbrochen.

In einer Weiterbildung des Verfahrens wird die Zuführung der gereinigten Röstabluft zu der zweiten Abluftreinigungseinrichtung abhängig von der Temperatur der in der Kühleinrichtung befindlichen gerösteten Lebensmittelprodukte und/oder abhängig von einer Temperatur der zweiten Abluftreinigungseinrichtung, insbesondere eines Katalysators der zweiten Abluftreinigungseinrichtung, und/oder abhängig von der in der schadstoffbelasteten Kühlabluft vorliegenden Schadstoffkonzentration geregelt, insbesondere unterbrochen. Vorzugsweise wird bei Überschreitung eines Schwellwerts der Temperatur der Lebensmittelprodukte und/oder der Temperatur der zweiten Abluftreinigungseinrichtung und/oder der Schadstoffkonzentration die Zuführung der gereinigten Röstabluft zu der zweiten Abluftreinigungseinrichtung unterbrochen.

Als besonders vorteilhaft wird es angesehen, wenn bei der Zuführung der gereinigten Röstabluft zur zweiten Abluftreinigungseinrichtung die Zuführung von schadstoffbelasteter Kühlabluft zur zweiten Abluftreinigungseinrichtung unterbrochen ist und/oder bei Zuführung der schadstoffbelasteten Kühlabluft zur zweiten Abluftreinigungseinrichtung die Zuführung von gereinigter Röstabluft zur zweiten Abluftreinigungseinrichtung unterbrochen ist.

In der Zeichnung ist die Erfindung anhand eines bevorzugten Ausführungsbeispiels dargestellt, ohne hierauf beschränkt zu sein. Es zeigt:

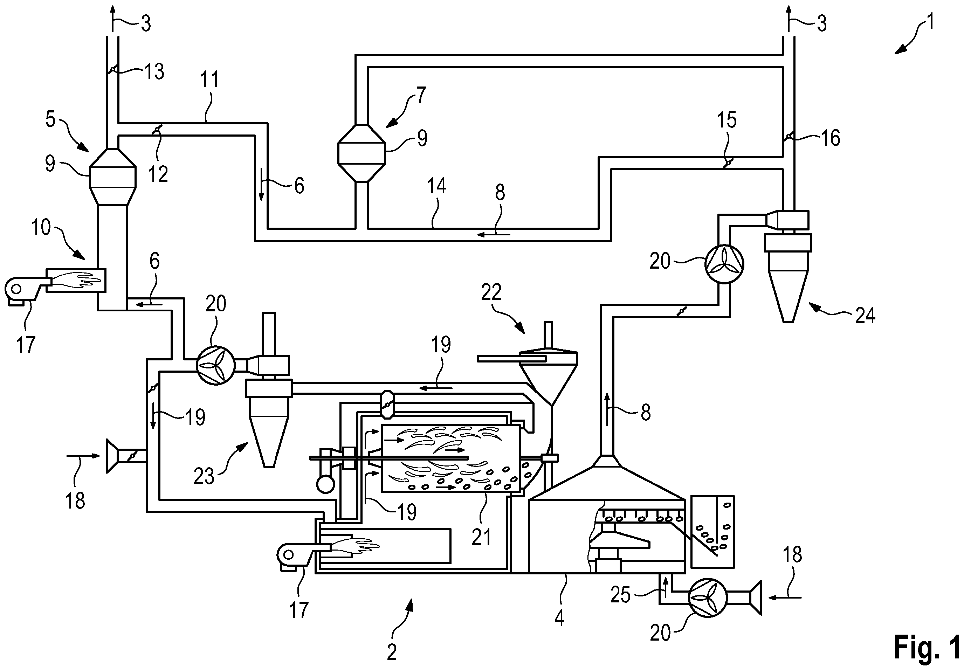

Fig. 1 eine Schemazeichnung eines Ausführungsbeispiels der erfindungsgemäßen Röstanlage

Die Röstanlage 1 weist eine Rösteinrichtung 2 zum Rösten der Lebensmittelprodukte und eine Kühleinrichtung 4 zum Kühlen der in der Rösteinrichtung 2 gerösteten Lebensmittelprodukte auf. Die Rösteinrichtung 2 umfasst einen Brenner 17 zum Erwärmen der Röstluft 19.

Die Röstanlage 1 weist eine erste Abluftreinigungseinrichtung 5 zum Reinigen von schadstoffbelasteter Röstabluft 6 der Rösteinrichtung 2 auf, wobei während des Röstvorgangs die beim Rösten der Lebensmittelprodukte entstehende schadstoffbelastete Röstabluft 6 der ersten Abluftreinigungseinrichtung 5 zugeführt wird.

Die Röstanlage 1 weist ferner eine zweite Abluftreinigungseinrichtung 7 zum Reinigen von schadstoffbelasteter Kühlabluft 8 der Kühleinrichtung 4 auf, wobei während des Kühlvorgangs die beim Abkühlen der gerösteten Lebensmittelprodukte in der Kühleinrichtung 4 entstehende schadstoffbelastete Kühlabluft 8 über eine Zuleitung 14 der zweiten Abluftreinigungseinrichtung 7 zuführbar ist. Die aus der ersten Abluftreinigungseinrichtung 5 austretende, gereinigte Röstabluft 6 ist über eine Zuleitung 11 zumindest teilweise der zweiten Abluftreinigungseinrichtung 7 zuführbar.

Die erste Abluftreinigungseinrichtung 5 und die zweite Abluftreinigungseinrichtung 7 weisen jeweils einen Katalysatorabschnitt mit einem Katalysator 9 zum katalytischen Nachverbrennen der jeweiligen Abluft 6, 8 auf.

Die erste Abluftreinigungseinrichtung 5 weist zudem einen thermischen Vorreiniger 10 auf, welcher einen Brenner 17 umfasst.

Die Zuführung der gereinigten Röstabluft 6 zu der zweiten Abluftreinigungseinrichtung 7 erfolgt über die erste Zuleitung 11, wobei die Zuführung der gereinigten Röstabluft 6 zu der zweiten Abluftreinigungseinrichtung 7 mittels einer ersten Armatur 12 und einer zweiten Armatur 13 geregelt, insbesondere unterbrochen werden kann.

Die Zuführung der schadstoffbelasteten Kühlabluft 8 zu der zweiten Abluftreinigungseinrichtung 7 erfolgt über die zweite Zuleitung 14, wobei die Zuführung der schadstoffbelasteten Kühlabluft 8 zu der zweiten Abluftreinigungseinrichtung 7 mittels einer dritten Armatur 15 und einer vierten Armatur 16 geregelt, insbesondere unterbrochen werden kann.

Die genannten Armaturen 12, 13, 15, 16, sind beispielsweise als Ventile ausgebildet.

Die Röstanlage 1 weist mehrere Fördereinrichtungen 20, welche als Ventilator ausgebildet sind, zum Fördern der Kühlluft 25 und der Röstluft 19 auf. Der Röstluft 19 und der Kühlluft 25 wird jeweils Frischluft 18 aus der Umgebung zugeführt.

Mittels eines Einfülltrichters 22 wird einer Rösttrommel 21 der Rösteinrichtung 2 das zu röstende Lebensmittelprodukt, vorliegend Kaffeebohnen, zugeführt.

Ferner weist die Röstanlage 1 einen Röstzyklon 23 und einen Kühlzyklon 24 auf. Diese dienen jeweils der Entfernung von Häutchen und/oder Staub aus dem jeweiligen Abluftstrom 6, 8.

Die gereinigte Kühlabluft 8 bzw. die mit unbedenklichen Konzentrationen an Schadstoffen belastete Kühlabluft 8 und die gereinigte Röstabluft 6 werden an die Umgebung abgegeben. Die Abgabe dieser Abluft 6, 8 an die Umgebung wird in der Fig. 1 durch die Pfeile 3 kenntlich gemacht.

### Bezugszeichenliste

- 1: Röstanlage
- 2: Rösteinrichtung
- 3: Pfeil
- 4: Kühleinrichtung
- 5: erste Abluftreinigungseinrichtung
- 6: Röstabluft
- 7: zweite Abluftreinigungseinrichtung
- 8: Kühlabluft
- 9: Katalysator
- 10: thermischer Vorreiniger
- 11: erste Zuleitung
- 12: erste Armatur
- 13: zweite Armatur
- 14: zweite Zuleitung
- 15: dritte Armatur
- 16: vierte Armatur
- 17: Brenner
- 18: Frischluft
- 19: Röstluft
- 20: Fördereinrichtung
- 21: Rösttrommel
- 22: Einfülltrichter
- 23: Röstzyklon
- 24: Kühlzyklon
- 25: Kühlluft

## Patentansprüche

1. Röstanlage (1) zum Rösten von Lebensmittelprodukten, insbesondere zum Rösten von Kaffeebohnen, wobei die Röstanlage (1) eine Rösteinrichtung (2) zum Rösten der Lebensmittelprodukte und eine Kühleinrichtung (4) zum Kühlen der in der Rösteinrichtung (2) gerösteten Lebensmittelprodukte aufweist, wobei die Röstanlage (1) eine erste Abluftreinigungseinrichtung (5) zum Reinigen von schadstoffbelasteter Röstabluft (6) der Rösteinrichtung (2) aufweist, wobei während des Röstvorgangs die beim Rösten der Lebensmittelprodukte entstehende schadstoffbelastete Röstabluft (6) der ersten Abluftreinigungseinrichtung (5) zugeführt wird, wobei die Röstanlage (1) eine zweite Abluftreinigungseinrichtung (7) zum Reinigen von schadstoffbelasteter Kühlabluft (8) der Kühleinrichtung (4) aufweist, **gekennzeichnet dadurch, dass** während des Kühlvorgangs die beim Abkühlen der gerösteten Lebensmittelprodukte in der Kühleinrichtung (4) entstehende schadstoffbelastete Kühlabluft (8) der zweiten Abluftreinigungseinrichtung (7) zuführbar ist, wobei die aus der ersten Abluftreinigungseinrichtung (5) austretende, gereinigte Röstabluft (6) zumindest teilweise der zweiten Abluftreinigungseinrichtung (7) zuführbar ist.

2. Röstanlage (1) nach Anspruch 1, wobei es sich bei der Röstanlage (1) um eine diskontinuierlich arbeitende Röstanlage (1) handelt.

3. Röstanlage (1) nach Anspruch 1 oder 2, wobei die Zuführung der gereinigten Röstabluft (6) und/oder die Zuführung der schadstoffbelasteten Kühlabluft (8) zu der zweiten Abluftreinigungseinrichtung (7) regelbar ist.

4. Röstanlage (1) nach einem der Ansprüche 1 bis 3, wobei die Röstanlage (1) eine erste Fördereinrichtung zum Fördern von Röstluft (19) und/oder eine zweite Fördereinrichtung zum Fördern von Kühlluft (25) aufweist.

5. Röstanlage (1) nach einem der Ansprüche 1 bis 4, wobei die erste Abluftreinigungseinrichtung (5) einen Katalysator (9) aufweist und/oder die zweite Abluftreinigungseinrichtung (7) einen Katalysator (9) aufweist.

6. Röstanlage (1) nach einem der Ansprüche 1 bis 5, wobei die schadstoffbelastete Kühlabluft (8) auch der ersten Abluftreinigungseinrichtung (5) zuführbar ist.

7. Röstanlage (1) nach einem der Ansprüche 1 bis 6, wobei die Rösteinrichtung (2) als Trommelröster ausgebildet ist.

8. Verfahren zum Betreiben einer Röstanlage (1) zum Rösten von Lebensmittelprodukten, insbesondere zum Betreiben einer Röstanlage (1) nach einem der Ansprüche 1 bis 7, wobei die Röstanlage (1) eine Rösteinrichtung (2) zum Rösten der Lebensmittelprodukte und eine Kühleinrichtung (4) zum Kühlen der in der Rösteinrichtung (2) gerösteten Lebensmittelprodukte aufweist, wobei die Röstanlage (1) eine erste Abluftreinigungseinrichtung (5) zum Reinigen von schadstoffbelasteter Röstabluft (6) der Rösteinrichtung (2) aufweist, wobei während des Röstvorgangs die beim Rösten der Lebensmittelprodukte entstehende schadstoffbelastete Röstabluft (6) der ersten Abluftreinigungseinrichtung (5) zugeführt wird, wobei die Röstanlage (1) eine zweite Abluftreinigungseinrichtung (7) zum Reinigen von schadstoffbelasteter Kühlabluft (8) der Kühleinrichtung (4) aufweist, **gekennzeichnet dadurch, dass** während des Kühlvorgangs die beim Abkühlen der gerösteten Lebensmittelprodukte in der Kühleinrichtung (4) entstehende schadstoffbelastete Kühlabluft (8) der zweiten Abluftreinigungseinrichtung (7) zugeführt wird, wobei die aus der ersten Abluftreinigungseinrichtung (5) austretende, gereinigte Röstabluft (6) zumindest teilweise der zweiten Abluftreinigungseinrichtung (7) zugeführt wird.

9. Verfahren nach Anspruch 8, wobei das Verfahren die folgenden Verfahrensschritte aufweist:
a) Einbringen der zu röstenden Lebensmittelprodukte in die Rösteinrichtung (2),
b) Rösten der Lebensmittelprodukte in der Rösteinrichtung (2), wobei während des Röstvorgangs die beim Rösten der Lebensmittelprodukte entstehende schadstoffbelastete Röstabluft (6) der ersten Abluftreinigungseinrichtung (5) zugeführt wird, wobei die aus der ersten Abluftreinigungseinrichtung (5) austretende, gereinigte Röstabluft (6) zumindest teilweise der zweiten Abluftreinigungseinrichtung zugeführt wird,
c) Überführen der gerösteten Lebensmittelprodukte aus der Rösteinrichtung (2) in die Kühleinrichtung (4) nach Abschluss des Röstvorgangs,
d) Abkühlen der gerösteten Lebensmittelprodukte in der Kühleinrichtung (4), wobei während des Kühlvorgangs die beim Abkühlen der gerösteten Lebensmittelprodukte in der Kühleinrichtung (4) entstehende Kühlabluft (8) der zweiten Abluftreinigungseinrichtung (7) zugeführt wird,
e) Entnehmen der gerösteten Lebensmittelprodukte aus der Kühleinrichtung (4) nach Abschluss des Kühlvorgangs,
f) Wiederholen der Verfahrensschritte a) bis e)

10. Verfahren nach Anspruch 8 oder 9, wobei der Röstvorgang und der Kühlvorgang zumindest teilweise zeitgleich ablaufen.

11. Verfahren nach einem der Ansprüche 8 bis 10, wobei die Zuführung der gereinigten Röstabluft (6) und/oder die Zuführung der schadstoffbelasteten Kühlabluft (8) zu der zweiten Abluftreinigungseinrichtung (7) diskontinuierlich erfolgt.

12. Verfahren nach einem der Ansprüche 8 bis 11, wobei zu Beginn des Kühlvorgangs die Kühlabluft (8) der zweiten Reinigungseinrichtung (7) zugeführt und die Zuführung der gereinigten Röstabluft (6) zu der zweiten Abluftreinigungseinrichtung (7) unterbrochen wird und zum Ende des Kühlvorgangs die gereinigte Röstabluft (6) der zweiten Abluftreinigungseinrichtung (7) zugeführt und die Zuführung der Kühlabluft (8) zu der zweiten Abluftreinigungseinrichtung (7) unterbrochen wird.

13. Verfahren nach einem der Ansprüche 8 bis 12, wobei die Zuführung der schadstoffbelasteten Kühlabluft (8) zu der zweiten Abluftreinigungseinrichtung (7) abhängig von einer Temperatur der in der Kühleinrichtung (4) befindlichen gerösteten Lebensmittelprodukte und/oder abhängig von einer Temperatur der zweiten Abluftreinigungseinrichtung (7) und/oder abhängig von einer in der schadstoffbelasteten Kühlabluft (8) vorliegenden Schadstoffkonzentration geregelt, insbesondere unterbrochen wird.

14. Verfahren nach einem der Ansprüche 8 bis 13, wobei die Zuführung der gereinigten Röstabluft (6) zu der zweiten Abluftreinigungseinrichtung (7) abhängig von der Temperatur der in der Kühleinrichtung (4) befindlichen gerösteten Lebensmittelprodukte und/oder abhängig von der Temperatur der zweiten Abluftreinigungseinrichtung (7) und/oder abhängig von der in der schadstoffbelasteten Kühlabluft (8) vorliegenden Schadstoffkonzentration geregelt, insbesondere unterbrochen wird.

15. Verfahren nach Anspruch 8 bis 14, wobei bei der Zuführung der gereinigten Röstabluft (6) zu der zweiten Abluftreinigungseinrichtung (7) die Zuführung von schadstoffbelasteter Kühlabluft (8) zur zweiten Abluftreinigungseinrichtung (7) unterbrochen ist und/oder bei Zuführung der schadstoffbelasteten Kühlabluft (8) zu der zweiten Abluftreinigungseinrichtung (7) die Zuführung von gereinigter Röstabluft (6) zu der zweiten Abluftreinigungseinrichtung (7) unterbrochen ist.

## Claims

1. Roasting unit (1) for roasting food products, in particular for roasting coffee beans, wherein the roasting unit (1) has a roasting device (2) for roasting the food products and a cooling device (4) for cooling the food products roasted in the roasting device (2), wherein the roasting unit (1) has a first exhaust air cleaning device (5) for cleaning pollutant-loaded roasting exhaust air (6) of the roasting device (2), wherein, during the roasting operation, the pollutant-loaded roasting exhaust air (6) arising during the roasting of the food products is supplied to the first exhaust air cleaning device (5), wherein the roasting unit (1) has a second exhaust air cleaning device (7) for cleaning pollutant-loaded cooling exhaust air (8) of the cooling device (4), **characterized in that**, during the cooling operation, the pollutant-loaded cooling exhaust air (8) arising during the cooling of the roasted food products in the cooling device (4) can be supplied to the second exhaust air cleaning device (7), wherein the cleaned roasting exhaust air (6) emerging from the first exhaust air cleaning device (5) can be at least partially supplied to the second exhaust air cleaning device (7) .

2. Roasting unit (1) according to Claim 1, wherein the roasting unit (1) is a discontinuously operating roasting unit (1).

3. Roasting unit (1) according to Claim 1 or 2, wherein the supply of the cleaned roasting exhaust air (6) and/or the supply of the pollutant-loaded cooling exhaust air (8) to the second exhaust air cleaning device (7) can be regulated.

4. Roasting unit (1) according to one of Claims 1 to 3, wherein the roasting unit (1) has a first conveying device for conveying roasting air (19) and/or a second conveying device for conveying cooling air (25).

5. Roasting unit (1) according to one of Claims 1 to 4, wherein the first exhaust air cleaning device (5) has a catalytic converter (9) and/or the second exhaust air cleaning device (7) has a catalytic converter (9).

6. Roasting unit (1) according to one of Claims 1 to 5, wherein the pollutant-loaded cooling exhaust air (8) can also be supplied to the first exhaust air cleaning device (5).

7. Roasting unit (1) according to one of Claims 1 to 6, wherein the roasting device (2) is in the form of a drum roaster.

8. Method for operating a roasting unit (1) for roasting food products, in particular for operating a roasting unit (1) according to one of Claims 1 to 7, wherein the roasting unit (1) has a roasting device (2) for roasting the food products and a cooling device (4) for cooling the food products roasted in the roasting device (2), wherein the roasting unit (1) has a first exhaust air cleaning device (5) for cleaning pollutant-loaded roasting exhaust air (6) of the roasting device (2), wherein, during the roasting operation, the pollutant-loaded roasting exhaust air (6) arising during the roasting of the food products is supplied to the first exhaust air cleaning device (5), wherein the roasting unit (1) has a second exhaust air cleaning device (7) for cleaning pollutant-loaded cooling exhaust air (8) of the cooling device (4), **characterized in that**, during the cooling operation, the pollutant-loaded cooling exhaust air (8) arising during the cooling of the roasted food products in the cooling device (4) is supplied to the second exhaust air cleaning device (7), wherein the cleaned roasting exhaust air (6) emerging from the first exhaust air cleaning device (5) is at least partially supplied to the second exhaust air cleaning device (7).

9. Method according to Claim 8, wherein the method has the following method steps:
a) introducing the food products to be roasted into the roasting device (2),
b) roasting the food products in the roasting device (2), wherein, during the roasting operation, the pollutant-loaded roasting exhaust air (6) arising during the roasting of the food products is supplied to the first exhaust air cleaning device (5), wherein the cleaned roasting exhaust air (6) emerging from the first exhaust air cleaning device (5) is at least partially supplied to the second exhaust air cleaning device,
c) transferring the roasted food products from the roasting device (2) into the cooling device (4) after the end of the roasting operation,
d) cooling the roasted food products in the cooling device (4), wherein, during the cooling operation, the cooling exhaust air (8) arising during the cooling of the roasted food products in the cooling device (4) is supplied to the second exhaust air cleaning device (7),
e) removing the roasted food products from the cooling device (4) after the end of the cooling operation,
f) repeating method steps a) to e).

10. Method according to Claim 8 or 9, wherein the roasting operation and the cooling operation at least partially proceed at the same time.

11. Method according to one of Claims 8 to 10, wherein the supply of the cleaned roasting exhaust air (6) and/or the supply of the pollutant-loaded cooling exhaust air (8) to the second exhaust air cleaning device (7) takes place discontinuously.

12. Method according to one of Claims 8 to 11, wherein, at the beginning of the cooling operation, the cooling exhaust air (8) is supplied to the second cleaning device (7) and the supply of the cleaned roasting exhaust air (6) to the second exhaust air cleaning device (7) is interrupted and, at the end of the cooling operation, the cleaned roasting exhaust air (6) is supplied to the second exhaust air cleaning device (7) and the supply of the cooling exhaust air (8) to the second exhaust air cleaning device (7) is interrupted.

13. Method according to one of Claims 8 to 12, wherein the supply of the pollutant-loaded cooling exhaust air (8) to the second exhaust air cleaning device (7) is regulated, in particular interrupted, depending on a temperature of the roasted food products located in the cooling device (4) and/or depending on a temperature of the second exhaust air cleaning device (7) and/or depending on a pollutant concentration present in the pollutant-loaded cooling exhaust air (8).

14. Method according to one of Claims 8 to 13, wherein the supply of the cleaned roasting air (6) to the second exhaust air cleaning device (7) is regulated, in particular interrupted, depending on the temperature of the roasted food products located in the cooling device (4) and/or depending on the temperature of the second exhaust air cleaning device (7) and/or depending on the pollutant concentration present in the pollutant-loaded cooling exhaust air (8).

15. Method according to Claims 8 to 14, wherein, during the supply of the cleaned roasting exhaust air (6) to the second exhaust air cleaning device (7), the supply of pollutant-loaded cooling air (8) to the second exhaust air cleaning device (7) is interrupted and/or, during the supply of the pollutant-loaded cooling exhaust air (8) to the second exhaust air cleaning device (7), the supply of cleaned roasting exhaust air (6) to the second exhaust air cleaning device (7) is interrupted.

## Revendications

1. Installation de torréfaction (1) permettant de torréfier des produits alimentaires, en particulier de torréfier des grains de café, l'installation de torréfaction (1) présentant un dispositif de torréfaction (2) permettant de torréfier les produits alimentaires et un dispositif de refroidissement (4) permettant de refroidir les produits alimentaires torréfiés dans le dispositif de torréfaction (2), l'installation de torréfaction (1) présentant un premier dispositif de purification d'air évacué (5) permettant de purifier l'air de torréfaction évacué pollué (6) du dispositif de torréfaction (2), dans laquelle, pendant l'opération de torréfaction, l'air de torréfaction évacué pollué (6) produit lors de la torréfaction des produits alimentaires est amené au premier dispositif de purification d'air évacué (5), l'installation de torréfaction (1) présentant un deuxième dispositif de purification d'air évacué (7) permettant de purifier de l'air de refroidissement évacué pollué (8) du dispositif de refroidissement (4),
**caractérisée en ce que** pendant l'opération de refroidissement, l'air de refroidissement évacué pollué (8) produit lors du refroidissement des produits alimentaires torréfiés dans le dispositif de refroidissement (4) peut être amené au deuxième dispositif de purification d'air évacué (7), l'air de torréfaction évacué purifié (6), sortant du premier dispositif de purification d'air évacué (5), pouvant être amené au moins en partie au deuxième dispositif de purification d'air évacué (7).

2. Installation de torréfaction (1) selon la revendication 1, dans laquelle l'installation de torréfaction (1) est une installation de torréfaction (1) à fonctionnement intermittent.

3. Installation de torréfaction (1) selon la revendication 1 ou 2, dans laquelle il est possible de régler l'apport en air de torréfaction évacué purifié (6) et/ou l'apport en air de refroidissement évacué pollué (8) au deuxième dispositif de purification d'air évacué (7) .

4. Installation de torréfaction (1) selon l'une quelconque des revendications 1 à 3, dans laquelle l'installation de torréfaction (1) présente un premier dispositif d'acheminement permettant d'acheminer l'air de torréfaction (19) et/ou un deuxième dispositif d'acheminement permettant d'acheminer l'air de refroidissement (25).

5. Installation de torréfaction (1) selon l'une quelconque des revendications 1 à 4, dans laquelle le premier dispositif de purification d'air évacué (5) présente un catalyseur (9) et/ou le deuxième dispositif de purification d'air évacué (7) présente un catalyseur (9) .

6. Installation de torréfaction (1) selon l'une quelconque des revendications 1 à 5, dans laquelle l'air de refroidissement évacué pollué (8) peut également être amené au premier dispositif de purification d'air évacué (5) .

7. Installation de torréfaction (1) selon l'une quelconque des revendications 1 à 6, dans laquelle le dispositif de torréfaction (2) est réalisé sous la forme d'un torréfacteur à tambour.

8. Procédé permettant de faire fonctionner une installation de torréfaction (1) permettant de torréfier des produits alimentaires, en particulier de faire fonctionner une installation de torréfaction (1) selon l'une quelconque des revendications 1 à 7, l'installation de torréfaction (1) présentant un dispositif de torréfaction (2) permettant de torréfier les produits alimentaires et un dispositif de refroidissement (4) permettant de refroidir les produits alimentaires torréfiés dans le dispositif de torréfaction (2), l'installation de torréfaction (1) présentant un premier dispositif de purification d'air évacué (5) permettant de purifier de l'air de torréfaction évacué pollué (6) du dispositif de torréfaction (2), dans lequel, pendant l'opération de torréfaction, l'air de torréfaction évacué pollué (6) produit lors de la torréfaction des produits alimentaires est amené au premier dispositif de purification d'air évacué (5), l'installation de torréfaction (1) présentant un deuxième dispositif de purification d'air évacué (7) permettant de purifier l'air de refroidissement pollué (8) du dispositif de refroidissement (4),
**caractérisé en ce que** pendant l'opération de refroidissement, l'air de refroidissement évacué pollué (8) produit lors du refroidissement des produits alimentaires torréfiés dans le dispositif de refroidissement (4) est amené au deuxième dispositif de purification d'air évacué (7), l'air de torréfaction évacué purifié (6), sortant du premier dispositif de purification d'air évacué (5), étant amené au moins en partie au deuxième dispositif de purification d'air évacué (7).

9. Procédé selon la revendication 8, le procédé présentant les étapes de procédé suivantes consistant à :
a) introduire dans le dispositif de torréfaction (2) les produits alimentaires à torréfier,
b) torréfier les produits alimentaires dans le dispositif de torréfaction (2), dans lequel, pendant l'opération de torréfaction, l'air de torréfaction évacué pollué (6) produit lors de la torréfaction des produits est amené au premier dispositif de purification d'air évacué (5), l'air de torréfaction évacué purifié (6) sortant du premier dispositif de purification d'air évacué (5) étant amené au moins en partie au deuxième dispositif de purification d'air évacué,
c) transférer les produits alimentaires torréfiés du dispositif de torréfaction (2) au dispositif de refroidissement (4) à l'issue de l'opération de torréfaction,
d) refroidir les produits alimentaires torréfiés dans le dispositif de refroidissement (4), dans lequel, pendant l'opération de refroidissement, l'air de refroidissement évacué (8) produit lors du refroidissement des produits alimentaires torréfiés dans le dispositif de refroidissement (4) est amené au deuxième dispositif de purification d'air évacué (7),
e) retirer les produits alimentaires torréfiés du dispositif de refroidissement (4) à l'issue de l'opération de refroidissement,
f) répéter les étapes de procédé a) à e).

10. Procédé selon la revendication 8 ou 9, dans lequel l'opération de torréfaction et l'opération de refroidissement se déroulent au moins partiellement en même temps.

11. Procédé selon l'une quelconque des revendications 8 à 10, dans lequel l'apport en air de torréfaction évacué purifié (6) et/ou l'apport en air de refroidissement évacué pollué (8) au deuxième dispositif de purification d'air évacué (7) sont effectués de manière intermittente.

12. Procédé selon l'une quelconque des revendications 8 à 11, dans lequel, au début de l'opération de refroidissement, l'air de refroidissement évacué (8) est amené au deuxième dispositif de purification (7) et l'apport en air de torréfaction évacué purifié (6) au deuxième dispositif de purification d'air évacué (7) est interrompu, et vers la fin de l'opération de refroidissement, l'air de torréfaction évacué purifié (6) est amené au deuxième dispositif de purification d'air évacué (7) et l'apport en air de refroidissement évacué (8) au deuxième dispositif de purification d'air évacué (7) est interrompu.

13. Procédé selon l'une quelconque des revendications 8 à 12, dans lequel l'apport en air de refroidissement évacué pollué (8) au deuxième dispositif de purification d'air évacué (7) est régulé, en particulier interrompu, en fonction d'une température des produits alimentaires torréfiés se trouvant dans le dispositif de refroidissement (4) et/ou en fonction d'une température du deuxième dispositif de purification d'air évacué (7) et/ou en fonction d'une concentration de polluants présente dans l'air de refroidissement évacué pollué (8).

14. Procédé selon l'une quelconque des revendications 8 à 13, dans lequel l'apport en air de torréfaction évacué purifié (6) au deuxième dispositif de purification d'air évacué (7) est régulé, en particulier interrompu, en fonction de la température des produits alimentaires torréfiés se trouvant dans le dispositif de refroidissement (4) et/ou en fonction de la température du deuxième dispositif de purification d'air évacué (7) et/ou en fonction de la concentration de polluants présente dans l'air de refroidissement évacué pollué (8).

15. Procédé selon la revendication 8 à 14, dans lequel, lors de l'apport en air de torréfaction évacué purifié (6) au deuxième dispositif de purification d'air évacué (7), l'apport en air de refroidissement pollué (8) au deuxième dispositif de purification d'air évacué (7) est interrompu, et/ou lors de l'apport en air de refroidissement évacué pollué (8) au deuxième dispositif de purification d'air évacué (7), l'apport en air de torréfaction évacué purifié (6) au deuxième dispositif de purification d'air évacué (7) est interrompu.
